# EUROPÄISCHE PATENTSCHRIFT

(11) **EP 4 107 019 B1**
(45) Veröffentlichungstag und Bekanntmachung des Hinweises auf die Patenterteilung: **10.04.2024**
(21) Anmeldenummer: 21706550.7
(22) Anmeldetag: 17.02.2021
(51) Int. Cl.: B60K 1/00, B60K 11/02

(54) **ANTRIEBSVORRICHTUNG MIT SELBSTGESTEUERTER KÜHLUNG**
DRIVE DEVICE WITH SELF-CONTROLLED COOLING
DISPOSITIF D'ENTRAÎNEMENT À REFROIDISSEMENT AUTONOME

(30) Priorität: 20.02.2020 DE 102020202203
(43) Veröffentlichungstag der Anmeldung: 28.12.2022
(73) Patentinhaber: Robert Bosch GmbH, 70442 Stuttgart (DE)
(72) Erfinder: HENKEL, Achim, 70563 Stuttgart (DE); WARWEL, Manuel, 71636 Ludwigsburg (DE)
(86) Internationale Anmeldenummer: PCT/EP2021/053843
(87) Internationale Veröffentlichungsnummer: WO 2021/165294

(56) Entgegenhaltungen:
- US-A1- 2009 289 583
- US-A1- 2013 116 871
- US-A1- 2020 031 191

## Beschreibung

Die Erfindung betrifft eine Antriebsvorrichtung, insbesondere für ein elektrisch antreibbares Fahrzeug, aufweisend mindestens einen Elektromotor, aufweisend mindestens einen Antriebsinverter zum Ansteuern des Elektromotors, und aufweisend mindestens eine Kühleinheit mit mindestens einer Kühlmittelpumpe, einem Kühler, mindestens einem Pumpeninverter und mit mindestens einem Wärmetauscher.

### Stand der Technik

Elektrische Antriebe erlangen zunehmend an Bedeutung bei der Motorisierung von Fahrzeugen. Im Betrieb erzeugen Elektromotoren Verlustleistung, die in Form von Wärme aus dem Elektromotor und der entsprechenden Leistungselektronik bzw. inverter abgeführt werden muss. Insbesondere bei leistungsfähigen Elektromotoren ist eine externe Kühlung der Komponenten des Elektroantriebs notwendig, um einen Betrieb der Komponenten innerhalb ihrer Spezifikation zu ermöglichen.

Die externe Kühlung umfasst üblicherweise Kühlmittelpumpen, die über separate Daten- und Versorgungsleitungen angesteuert und mit elektrischer Energie versorgt werden. Zum Erhöhen der Gesamteffizient des Fahrzeugs werden Kühlmittelpumpen bedarfsgerecht angesteuert. Hierdurch kann bei hoher Leistungsanforderung des elektrischen Antriebs auch von der Kühlmittelpumpe eine erhöhte Kühlleistung angefordert werden. Eine derartige Optimierung der bereitgestellten Kühlleistung auf Fahrzeugebene ist oftmals kompliziert und technisch aufwändig. Des Weiteren ist der Montageaufwand für die elektrische Anbindung der Kühlung zu einem zentralen Steuergerät umständlich. Aus US2013/116871 ist eine gattungsgemäße Antriebsvorrichtung bekannt.

### Offenbarung der Erfindung

Die der Erfindung zugrunde liegende Aufgabe kann darin gesehen werden, eine Antriebsvorrichtung mit einer kosteneffizienten und kompakten Kühlung vorzuschlagen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt der Erfindung wird eine Antriebsvorrichtung, insbesondere für ein elektrisch antreibbares Fahrzeug, bereitgestellt. Die Antriebsvorrichtung weist mindestens einen Elektromotor und mindestens einen Antriebsinverter zum Ansteuern des Elektromotors auf.

Des Weiteren ist mindestens eine Kühleinheit mit mindestens einer Kühlmittelpumpe, einem Kühler, mindestens einem Pumpeninverter und mit mindestens einem Wärmetauscher vorgesehen. Der Wärmetauscher ist über einen Kühlmittelkreis mit der Kühlmittelpumpe und dem Kühler fluidleitend verbunden.

Bevorzugterweise ist mindestens ein Pumpeninverter in den Antriebsinverter integriert oder zum Antriebsinverter benachbart angeordnet, wobei die Kühlmittelpumpe durch den Pumpeninverter ansteuerbar ist.

Die Antriebsvorrichtung kombiniert somit Aggregate aus dem Antriebsstrang mit Aggregaten aus der HVAC/Kühlungsdomäne. Hierdurch können ein preiswerteres Gesamtsystem und Fahrzeug geschaffen werden. Der Antriebsinverter kann dabei die Ansteuerung der Kühlmittelpumpe des Elektroantriebs übernehmen. Dies erfolgt durch die Integration des oder der entsprechenden Pumpeninverter in den Antriebsinverter oder die Anordnung der Pumpeninverter neben den Antriebsinverter.

Der Antriebsinverter ist dazu eingerichtet, den mindestens einen Elektromotor anzusteuern und kann die Gleichspannung der Traktionsbatterie oder einer Gleichspannungsquelle zum Betreiben des Elektromotors wandeln. Beispielsweise kann der Antriebsinverter Gleichspannung in Wechselspannung transformieren, um den Elektromotor über drei oder sechs Phasen anzusteuern. Der Antriebsinverter kann dabei eine Datenschnittstelle aufweisen, durch welche beispielsweise ein Leistungsbedarf dem Antriebsinverter mitgeteilt werden kann.

Der Pumpeninverter kann eine oder mehrere Kühlmittelpumpen ansteuern und somit eine Förderung des Kühlmittels im Kühlmittelkreis ermöglichen. Dabei kann der Pumpeninverter abhängig von der geforderten Leistung der Antriebskomponenten einen höheren oder geringeren Volumenstrom des Kühlmittels einstellen.

Durch die erfindungsgemäße Antriebsvorrichtung kann eine Elektroachse mit einer selbstgesteuerten bzw. selbstverwalteten Kühlung realisiert werden. Es entstehen insbesondere Synergien bei der Leistungs- und/oder Daten-Versorgung, da diese zentral aus dem achsenseitigen bzw. elektromotorseitigen Antriebsinverter versorgt werden.

Die Integration der Kühlaggregate-Ansteuerung in den Antriebsinverter macht aus dem Antriebsinverter ein in sich geschlossenes, leicht applizierbares System. Insbesondere kann die technische aufwändige Umsetzung der Kommunikation des Kühlmittelflussvolumens zwischen der Kühlmittelpumpe, einem zentralen Steuergerät und den Antriebskomponenten entfallen. Die Antriebskomponenten, wie beispielsweise Elektromotor und Antriebsinverter, können somit führ ihre eigene Kühlung sorgen und auf diese Weise die thermische, elektrische und mechanische Steuerung in einem Elektrofahrzeug übernehmen. Damit entsteht eine multi-funktionale Antriebsvorrichtung, die für die Drehmomentensteuerung (Traktion und Verzögerung durch Rekuperation) eigenständig ausgelegt werden kann.

Als wesentliche Schnittstelle zur übergeordneten Fahrzeugsteuerung kann die als Einheit ausgestaltete Antriebsvorrichtung die Datenschnittstelle aufweisen. Über die Datenschnittstelle können Lateral-Sollwertvorgaben, wie beispielsweise Drehmomentenvorgaben, Kraftvorgaben, oder Beschleunigungsvorgaben, mit einer zentralen Fahrzeugsteuerung ausgetauscht werden.

Ein weiterer Vorteil liegt in der Reduktion des Verkabelungsaufwandes durch den Entfall der Datenleitungen und der Energieversorgungsleitungen der mindestens einen Kühleinheit. Die Kühlmittelpumpe kann über eine zentrale Daten- und Energieversorgung der Antriebskomponenten elektrisch angeschlossen werden. Dabei kann eine optimierte räumliche Anordnung des Antriebsinverters, des Elektromotors und des Pumpeninverters die gemeinsame Nutzung einer Kühlfläche erlauben, um die thermische Auslegung des Pumpeninverters und der Antriebsvorrichtung zu vereinfachen.

Des Weiteren kann der Montageaufwand der Antriebsvorrichtung durch die Integration des Pumpeninverters in den Antriebsinverter reduziert werden. Hierbei können die Komponenten mit einer geringeren Anzahl von Anschraubpunkten befestigt werden und nehmen einen geringeren Bauraum im Fahrzeug ein.

Die Antriebsvorrichtung kann vorzugsweise in einem elektrisch antreibbaren Fahrzeug verwendet werden. Ein derartiges Fahrzeug kann beispielsweise ein Elektrofahrzeug oder ein Hybridfahrzeug sein.

Das Fahrzeug kann gemäß der BASt Norm assistiert, teilautomatisiert, hochautomatisiert und/oder vollautomatisiert bzw. fahrerlos betreibbar sein.

Das Fahrzeug kann beispielsweise als ein Personenkraftwagen, ein Lastkraftwagen, ein Robotaxi und dergleichen sein. Das Fahrzeug ist nicht auf einen Betrieb auf Straßen beschränkt. Vielmehr kann das Fahrzeug auch als ein Wasserfahrzeug, Luftfahrzeug, wie beispielsweise eine Transportdrohne, und dergleichen ausgestaltet sein.

Bei einem Ausführungsbeispiel sind der Elektromotor und der Antriebsinverter als eine Elektroachse ausgestaltet. Alternativ oder zusätzlich kann auch ein Getriebe des Elektromotors in die Elektroachse bzw. eAchse integriert sein. Die Antriebsvorrichtung kann somit als eine selbstkühlende eAchse ausgeführt sein, welche in der Lage ist die bedarfsgerechte Kühlung intern zu optimieren.

Durch diese Maßnahme kann die Energieaufnahme der Kühlmittelpumpe minimiert und der Eigenschutz bzw. die Lebensdauer der gekühlten Antriebskomponenten erhöht werden.

Nach einer weiteren Ausführungsform ist der Pumpeninverter in einem gemeinsamen Gehäuse des Antriebsinverters angeordnet. Hierdurch kann eine räumliche Kopplung des Antriebsinverters und des Pumpeninverters realisiert werden. Durch diese räumliche Kopplung können Synergien bei der thermischen Regelung der Inverter, beispielsweise durch gemeinsame Kühlkörper, ausgenutzt werden.

Des Weiteren kann eine funktionale Kopplung der Inverter umgesetzt werden. Die funktionale Kopplung kann dazu eingesetzt werden, elektronische Komponenten, wie beispielsweise Mikroprozessoren und ASIC-Schutzbeschaltungen, gemeinsam für mehrere Inverter zu nutzen.

Gemäß einem weiteren Ausführungsbeispiel ist die Kühlmittelpumpe zu dem Elektromotor und/oder dem Antriebsinverter benachbart angeordnet. Hierdurch kann die Kühlmittelpumpe räumlich den Antriebskomponenten und dem Pumpeninverter zugeordnet werden. Dabei können Kühlmittelleitungen und elektrische Leitungen verkürzt und der Montageaufwand der Antriebsvorrichtung verringert werden.

Nach einer weiteren Ausführungsform weisen der Elektromotor, der Antriebsinverter und/oder der Pumpeninverter einen gemeinsamen Wärmetauscher auf, welcher fluidleitend mit der Kühlmittelpumpe verbunden ist. Durch diese Maßnahme kann eine technisch besonders einfache Antriebsvorrichtung bereitgestellt werden. Alle Antriebskomponenten oder nur der Pumpeninverter mit dem Antriebsinverter können einen gemeinsamen Wärmetauscher und/oder eine gemeinsame Kühlfläche verwenden und somit die Komplexität des Thermomanagements reduzieren.

Gemäß einem weiteren Ausführungsbeispiel sind der Antriebsinverter und der mindestens eine Pumpeninverter mit einem gemeinsamen Wärmetauscher oder mit separaten Wärmetauschern thermisch verbunden. Die beiden Inverter können somit einen gemeinsamen Kühler bzw. Wärmetauscher nutzen. Alternativ oder zusätzlich können abhängig von den Betriebstemperaturen der Inverter separate Kühlkörper mit verschiedenen Kühlkreislauftemperaturen vorgesehen sein.

Die jeweiligen Kühlmittelkreise können voneinander entkoppelt sein. Dabei kann jeder Inverter seinen eigenen Kühlmittelkreis aufweisen.

Nach einer weiteren Ausführungsform ist der Elektromotor thermisch mit einem ersten Wärmetauscher gekoppelt, welcher über einen ersten Kühlmittelkreis fluidleitend mit einer ersten Kühleinheit verbunden ist.

Vorzugsweise sind der Antriebsinverter und/oder mindestens ein Pumpeninverter thermisch mit mindestens einem zweiten Wärmetauscher gekoppelt, welcher über einen zweiten Kühlmittelkreis fluidleitend mit einer zweiten Kühleinheit verbunden ist. Bei dieser Ausgestaltung kann der mindestens eine Elektromotor von einer Kühleinheit thermisch geregelt werden, welche sich von einer Kühleinheit der Inverter unterscheidet. Durch diese Maßnahme können unterschiedliche Temperaturniveaus für den Elektromotor und für die Leistungselektronik zum Ansteuern des Elektromotors und des Pumpenmotors, in Form des Antriebsinverters und des Pumpeninverters, realisiert werden. Beispielsweise kann der Elektromotor auf einem gegenüber der Leistungselektronik höheren Temperaturniveau betrieben werden. Die Kühlung der Antriebsvorrichtung kann somit besonders effizient sein.

Gemäß einem weiteren Ausführungsbeispiel weist der mindestens eine Kühlmittelkreis ein Kühlmittel auf, wobei das Kühlmittel als ein Öl, Wasser, Luft oder als eine wässrige Lösung ausgestaltet ist. Hierdurch kann die thermische Regelung der Antriebskomponenten besonders vielseitig umgesetzt werden.

Beispielsweise kann der Elektromotor mit einem gegenüber den Invertern unterschiedlichen Kühlmedium gekühlt werden.

Die unterschiedlichen Kühlmittelkreise können gleiche oder unterschiedliche Kühlmittel aufweisen.

Im Folgenden werden anhand von stark vereinfachten schematischen Darstellungen bevorzugte Ausführungsbeispiele der Erfindung näher erläutert. Hierbei zeigen
- Fig. 1: eine schematische Darstellung einer Antriebsvorrichtung gemäß einer Ausführungsform,
- Fig. 2: eine schematische Darstellung einer Antriebsvorrichtung gemäß einer weiteren Ausführungsform,
- Fig. 3: eine schematische Darstellung einer Antriebsvorrichtung mit separaten Kühlmittelkreisen gemäß einer Ausführungsform und
- Fig. 4: eine schematische Darstellung einer Antriebsvorrichtung mit separaten Kühlmittelkreisen gemäß einer weiteren Ausführungsform.

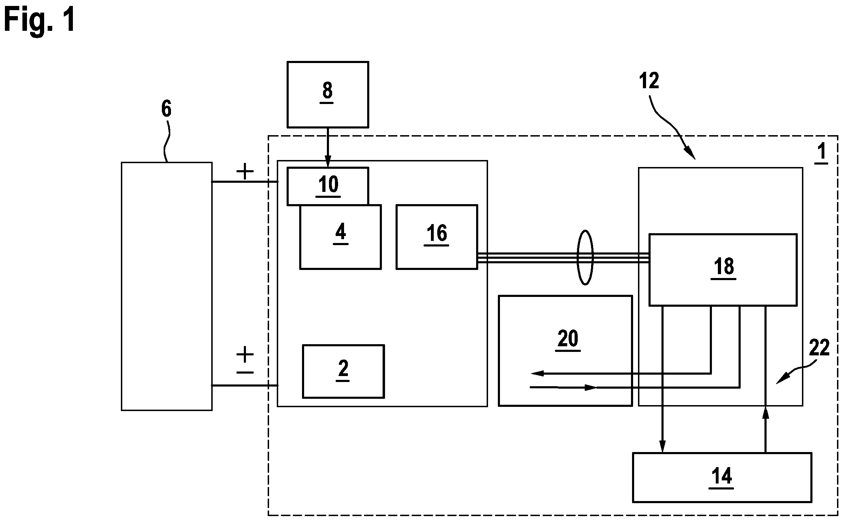

In der Figur 1 ist eine schematische Darstellung einer Antriebsvorrichtung 1 gemäß einer Ausführungsform gezeigt. Die Antriebsvorrichtung 1 kann in einem elektrisch antreibbaren Fahrzeug, wie beispielsweise einem Elektrofahrzeug oder einem Hybridfahrzeug, eingesetzt werden.

Die im Ausführungsbeispiel dargestellte Antriebsvorrichtung 1 weist einen Elektromotor 2 und einen Antriebsinverter 4 zum Ansteuern des Elektromotors 2 auf.

Der Antriebsinverter 4 kann die von einer Traktionsbatterie 6 bereitgestellte elektrische Energie dem Elektromotor 2 bereitstellen und regeln. Beispielsweise kann der Antriebsinverter 4 eine als Gleichspannung bereitgestellte Energie der Traktionsbatterie 6 in Form von Wechselspannung dem Elektromotor 2 bereitstellen.

Als Schnittstelle zu einer übergeordneten Fahrzeugsteuerung 8 kann die Antriebsvorrichtung 1 eine Datenschnittstelle 10 aufweisen. Über die Datenschnittstelle 10 können Lateral-Sollwertvorgaben, wie beispielsweise Drehmomentenvorgaben, Kraftvorgaben, oder Beschleunigungsvorgaben, mit einer zentralen Fahrzeugsteuerung 8 ausgetauscht werden.

Des Weiteren weist die Antriebsvorrichtung 1 eine Kühleinheit 12 auf. Die Kühleinheit 12 kann beispielsweise einen Kühler 14, einen Pumpeninverter 16 und eine Kühlmittelpumpe 18 aufweisen. Über einen Wärmetauscher 20 kann die Kühleinheit 12.

Der Pumpeninverter 16 dient zum Ansteuern der Kühlmittelpumpe 18 und ist vorzugsweise in den Antriebsinverter 4 integriert oder zum Antriebsinverter 4 benachbart angeordnet.

Die der Elektromotor 2, der Antriebsinverter 4 und der Pumpeninverter 16 können als ein Einheit, wie beispielsweise eine Elektroachse, ausgestaltet sein.

Die Kühlmittelpumpe 18 kann ein Kühlmittel in einem Kühlmittelkreis 22 fördern. Der Kühlmittelkreis 22 verbindet die Kühlmittelpumpe 18 mit dem Kühler 14 und einem Wärmetauscher 20.

Der Wärmetauscher 20 ist dazu eingerichtet, Verlustleistung und Abwärme des Antriebsinverters 4, des Elektromotors 2 und des Pumpeninverters 16 in das Kühlmittel zu transportieren. Die vom Kühlmittel aufgenommene Wärme kann anschließend im Kühler 14 abgegeben werden.

Durch die Integration des Pumpeninverters 16 in die Elektroachse kann dieser durch die Anschlüsse des Antriebsinverters 4 mitversorgt werden. Des Weiteren kann der Leistungsbedarf der Kühlmittelpumpe 18 direkt an der zu kühlenden Elektroachse ermittelt werden. Die Ansteuerung der Kühlmittelpumpe 18 erfolgt direkt durch den Pumpeninverter 16.

Das Kühlmittel im Kühlmittelkreis 22 kann beispielsweise eine wässrige Lösung sein.

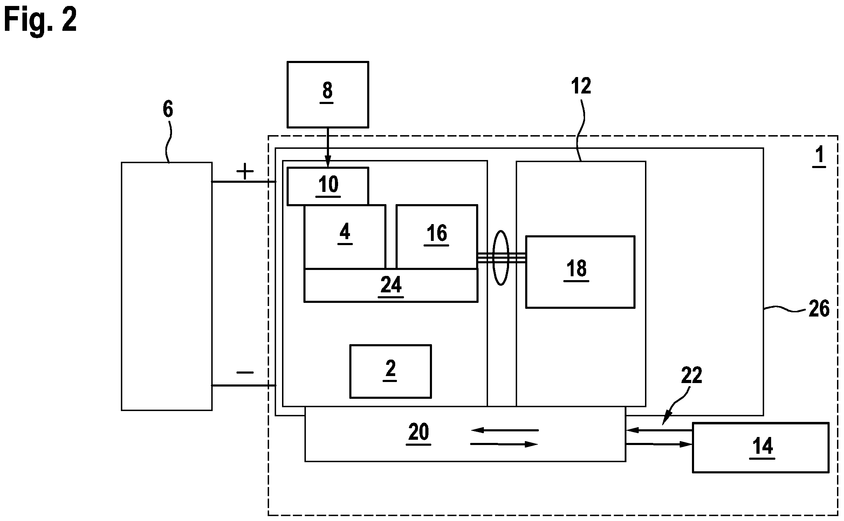

Die Figur 2 veranschaulicht in einer schematischen Darstellung eine Antriebsvorrichtung 1 gemäß einer weiteren Ausführungsform. Im Unterschied zur in Figur 1 gezeigten Antriebsvorrichtung 1, sind der Antriebsinverter 4 und der Pumpeninverter 16 auf einer gemeinsamen Kühlplatte 24 angeordnet, um ein vereinfachtes Thermomanagement der Leistungselektronik des Antriebsinverters 4 und des Pumpeninverters 16 zu ermöglichen. Dabei

Des Weiteren weist die Antriebsvorrichtung 1 im dargestellten Ausführungsbeispiel eine Anordnung der Kühleinheit 12 und der Elektroachse 4, 2, 16 in einem gemeinsamen Gehäuse 26 auf. Hierdurch kann die gesamte Antriebsvorrichtung 1 als eine Einheit ausgestaltet sein, welche vereinfacht montierbar ist.

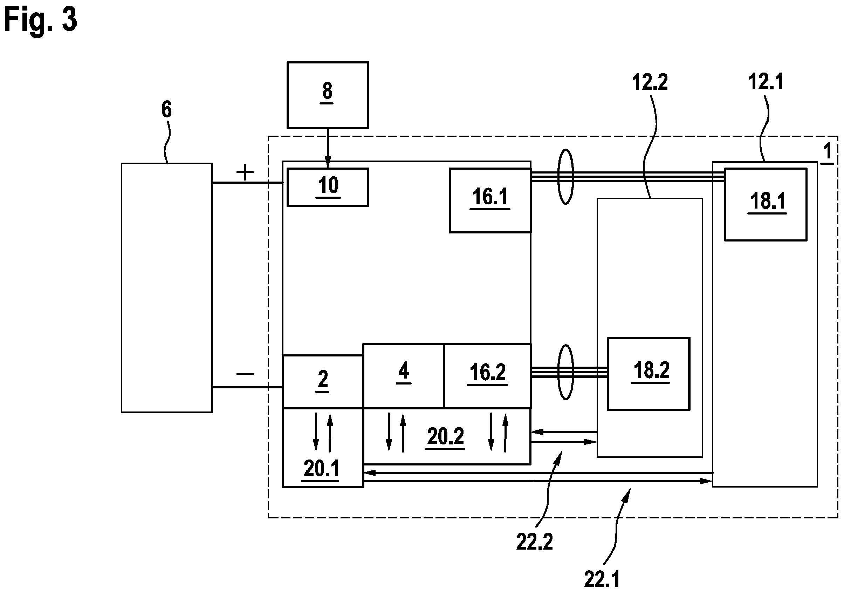

In der Figur 3 ist eine schematische Darstellung einer Antriebsvorrichtung 1 mit separaten Kühlmittelkreisen 22.1, 22.2 gemäß einer Ausführungsform dargestellt.

Der Elektromotor 2 ist thermisch mit einem ersten Wärmetauscher 20.1 gekoppelt, welcher über einen ersten Kühlmittelkreis 22.1 fluidleitend mit einer ersten Kühleinheit 12.1 verbunden ist. Der erste Wärmetauscher 20.1 wird über eine erste Kühleinheit 12.1 mit Kühlmittel versorgt. Dabei fördert eine erste Kühlmittelpumpe 18.1 das Kühlmittel im ersten Kühlmittelkreis 22.1.

Ein zweiter Kühlmittelkreis 22.2 wird über eine zweite Kühleinheit 12.2 mit einer zweiten Kühlmittelpumpe 18.2 betrieben. Dabei ist ein zweiter Wärmetauscher 20.2 fluidleitend mit dem zweiten Kühlmittelkreis 22.2 verbunden.

Die erste Kühlmittelpumpe 18.1 wird von einem ersten Pumpeninverter 16.1 und die zweite Kühlmittelpumpe 18.2 von einem zweiten Pumpeninverter 16.2 angesteuert und mit elektrischer Energie versorgt.

Die erste Kühleinheit 12.1 kann mit dem ersten Kühlmittelkreis 22.1 ein erstes Temperaturniveau bzw. Wärmetransfer im ersten Wärmetauscher 20.1 zum thermischen Regeln des Elektromotors 2 einstellen.

Die zweite Kühleinheit 12.2 kann mit dem zweiten Kühlmittelkreis 22.2 ein zweites Temperaturniveau bzw. Wärmetransfer im zweiten Wärmetauscher 20.2 zum thermischen Regeln des Antriebsinverters 4 und des zweiten Pumpeninverters 16.2 einstellen. Der erste Pumpeninverter 16.1 kann hierbei ebenfalls durch den zweiten Wärmetauscher 20.2 gekühlt werden.

Die Wärmetauscher 20 sind grundsätzlich nicht nur zum Kühlen von Komponenten geeignet. Je nach Ausgestaltung der Antriebsvorrichtung 1 können die Wärmetauscher 20 auch zum Aufwärmen der Komponenten verwendet werden, um einen Betrieb der Komponenten innerhalb von optimalen Spezifikationen zu ermöglichen.

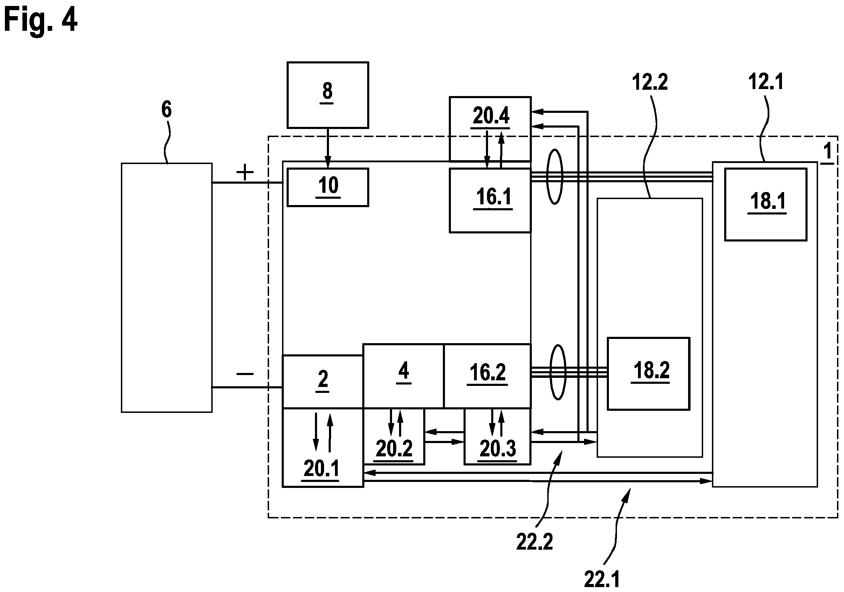

Figur 4 zeigt eine schematische Darstellung einer Antriebsvorrichtung 1 mit separaten Kühlmittelkreisen 22.1, 22.1 gemäß einer weiteren Ausführungsform. Im Unterschied zum in Figur 3 gezeigten Ausführungsbeispiel, weist die Antriebsvorrichtung 1 für jeden Inverter 4, 16.1, 16.2 einen separaten Wärmetauscher 20.2, 20.3, 20.4 auf. Die Wärmetauscher 20.2, 20.3, 20.4 sind alle gemeinsam fluidleitend mit dem zweiten Kühlmittelkreis 22.2 verbunden.

Der Übersicht halber sind in der Figur 3 und der Figur 4 keine Kühler 14 dargestellt.

Gemäß einer alternativen Ausgestaltung können auch mehrere voneinander entkoppelte Kühlmittelkreise eingesetzt werden, um unterschiedliche Inverter 4, 16.1, 16.2 zu kühlen. Beispielsweise kann jeder Inverter 4, 16.1, 16.2 durch einen Wärmetauscher 20.2, 20.3, 20.4 gekühlt werden, welcher mit jeweils einem separaten Kühlmittelkreis fluidleitend gekoppelt ist.

## Patentansprüche

1. Antriebsvorrichtung (1), insbesondere für ein elektrisch antreibbares Fahrzeug, aufweisend
- mindestens einen Elektromotor (2),
- mindestens einen Antriebsinverter (4) zum Ansteuern des Elektromotors (2),
- mindestens eine Kühleinheit (12) mit mindestens einer Kühlmittelpumpe (18), einem Kühler (14), mindestens einem Pumpeninverter (16) und mit mindestens einem Wärmetauscher (20), wobei der Wärmetauscher (20) über einen Kühlmittelkreis (22) mit der Kühlmittelpumpe (18) und dem Kühler (14) fluidleitend verbunden ist, wobei die Kühlmittelpumpe (18) durch den Pumpeninverter (16) ansteuerbar ist,
**dadurch gekennzeichnet, dass** mindestens ein Pumpeninverter (16) in den Antriebsinverter (4) integriert oder zum Antriebsinverter (4) benachbart angeordnet ist.

2. Antriebsvorrichtung nach Anspruch 1, wobei der Elektromotor (2) und der Antriebsinverter (4) oder der Elektromotor (2), der Antriebsinverter (4) und ein Getriebe als eine Elektroachse ausgestaltet sind.

3. Antriebsvorrichtung nach Anspruch 1 oder 2, wobei der Pumpeninverter (16) in einem gemeinsamen Gehäuse (26) des Antriebsinverters (4) angeordnet ist.

4. Antriebsvorrichtung nach einem der Ansprüche 1 bis 3, wobei die Kühlmittelpumpe (18) zu dem Elektromotor (2) und/oder dem Antriebsinverter (4) benachbart angeordnet ist.

5. Antriebsvorrichtung nach einem der Ansprüche 1 bis 4, wobei der Elektromotor (2), der Antriebsinverter (4) und/oder der Pumpeninverter (16) einen gemeinsamen Wärmetauscher (20) aufweisen, welcher fluidleitend mit der Kühlmittelpumpe (18) verbunden ist.

6. Antriebsvorrichtung nach einem der Ansprüche 1 bis 4, wobei der Antriebsinverter (4) und der mindestens eine Pumpeninverter (16) mit einem gemeinsamen Wärmetauscher (20.2) oder mit separaten Wärmetauschern (20.2, 20.3, 20.4) thermisch verbunden sind.

7. Antriebsvorrichtung nach einem der Ansprüche 1 bis 4, wobei der Elektromotor (2) thermisch mit einem ersten Wärmetauscher (20.1) gekoppelt ist, welcher über einen ersten Kühlmittelkreis (22.1) fluidleitend mit einer ersten Kühleinheit (12.1) verbunden ist, wobei der Antriebsinverter (4) und/oder mindestens ein Pumpeninverter (16) thermisch mit mindestens einem zweiten Wärmetauscher (20.2) gekoppelt ist, welcher über einen zweiten Kühlmittelkreis (22.2) fluidleitend mit einer zweiten Kühleinheit (12.2) verbunden ist.

8. Antriebsvorrichtung nach einem der Ansprüche 1 bis 7, wobei der mindestens eine Kühlmittelkreis (22) ein Kühlmittel aufweist, wobei das Kühlmittel ein Öl, Wasser, Luft oder eine wässrige Lösung ist.

## Claims

1. Drive device (1), in particular for an electrically driveable vehicle, having
- at least one electric motor (2),
- at least one drive inverter (4) for actuating the electric motor (2),
- at least one cooling unit (12) with at least one coolant pump (18), a cooler (14), at least one pump inverter (16) and with at least one heat exchanger (20), wherein the heat exchanger (20) is connected in a fluid-conducting fashion to the coolant pump (18) and the cooler (14) via a coolant circuit (22), wherein the coolant pump (18) can be actuated by the pump inverter (16),
**characterized in that** at least one pump inverter (16) is integrated into the drive inverter (4) or arranged adjacent to the drive inverter (4).

2. Drive device according to Claim 1, wherein the electric motor (2) and the drive inverter (4) or the electric motor (2), the drive inverter (4) and a transmission are designed as an electric axle.

3. Drive device according to Claim 1 or 2, wherein the pump inverter (16) is arranged in a common housing (26) of the drive inverter (4).

4. Drive device according to one of Claims 1 to 3, wherein the coolant pump (18) is arranged adjacent to the electric motor (2) and/or the drive inverter (4).

5. Drive device according to one of Claims 1 to 4, wherein the electric motor (2), the drive inverter (4) and/or the pump inverter (16) have a common heat exchanger (20) which is connected in a fluid-conducting fashion to the coolant pump (18).

6. Drive device according to one of Claims 1 to 4, wherein the drive inverter (4) and the at least one pump inverter (16) are thermally connected to a common heat exchanger (20.2) or to separate heat exchangers (20.2, 20.3, 20.4).

7. Drive device according to one of Claims 1 to 4, wherein the electric motor (2) is thermally coupled to a first heat exchanger (20.1) which is connected in a fluid-conducting fashion to a first cooling unit (12.1) via a first coolant circuit (22.1), wherein the drive inverter (4) and/or at least one pump inverter (16) are/is thermally coupled to at least one second heat exchanger (20.2) which is connected in a fluid-conducting fashion to a second cooling unit (12.2) via a second coolant circuit (22.2).

8. Drive device according to one of Claims 1 to 7, wherein the at least one coolant circuit (22) contains a coolant, wherein the coolant is an oil, water, air or an aqueous solution.

## Revendications

1. Dispositif d'entraînement (1), en particulier pour un véhicule pouvant être entraîné électriquement, présentant
- au moins un moteur électrique (2),
- au moins un inverseur d'entraînement (4) pour piloter le moteur électrique (2),
- au moins une unité de refroidissement (12) comprenant au moins une pompe à produit réfrigérant (18), un refroidisseur (14), au moins un inverseur de pompe (16), et comprenant au moins un échangeur thermique (20), dans lequel l'échangeur thermique (20) est relié en liaison fluidique par un circuit de produit réfrigérant (22) à la pompe à produit réfrigérant (18) et au refroidisseur (14), dans lequel la pompe à produit réfrigérant (18) peut être pilotée par l'inverseur de pompe (16),
**caractérisé en ce qu'**au moins un inverseur de pompe (16) est intégré dans l'inverseur d'entraînement (4) ou est disposé de manière adjacente à l'inverseur d'entraînement (4).

2. Dispositif d'entraînement selon la revendication 1, dans lequel le moteur électrique (2) et l'inverseur d'entraînement (4) ou le moteur électrique (2), l'inverseur d'entraînement (4) et un mécanisme de transmission sont configurés comme un essieu électrique.

3. Dispositif d'entraînement selon la revendication 1 ou 2, dans lequel l'inverseur de pompe (16) est disposé dans un boîtier commun (26) de l'inverseur d'entraînement (4).

4. Dispositif d'entraînement selon l'une quelconque des revendications 1 à 3, dans lequel la pompe à produit réfrigérant (18) est disposée de manière adjacente au moteur électrique (2) et/ou à l'inverseur d'entraînement (4).

5. Dispositif d'entraînement selon l'une quelconque des revendications précédentes 1 à 4, dans lequel le moteur électrique (2), l'inverseur d'entraînement (4) et/ou l'inverseur de pompe (16) présentent un échangeur thermique (20) commun qui est relié en liaison fluidique à la pompe à produit réfrigérant (18).

6. Dispositif d'entraînement selon l'une quelconque des revendications précédentes 1 à 4, dans lequel l'inverseur d'entraînement (4) et ledit au moins un inverseur de pompe (16) sont reliés thermiquement à un échangeur thermique commun (20.2) ou à des échangeurs thermiques séparés (20.2, 20.3, 20.4).

7. Dispositif d'entraînement selon l'une quelconque des revendications précédentes 1 à 4, dans lequel le moteur électrique (2) est couplé thermiquement à un premier échangeur thermique (20.1) qui est relié en liaison fluidique par un premier circuit de produit réfrigérant (22.1) à une première unité de refroidissement (12.1), dans lequel l'inverseur d'entraînement (4) et/ou au moins un inverseur de pompe (16) est couplé thermiquement à au moins un deuxième échangeur thermique (20.2) qui est relié en liaison fluidique par un deuxième circuit de produit réfrigérant (22.2) à une deuxième unité de refroidissement (12.2).

8. Dispositif d'entraînement selon l'une quelconque des revendications précédentes 1 à 7, dans lequel ledit au moins un circuit de produit réfrigérant (22) présente un produit réfrigérant, dans lequel le produit réfrigérant est une huile, de l'eau, de l'air ou une solution aqueuse.
